# EUROPEAN PATENT APPLICATION

(11) **EP 4 459 723 A1**
(43) Date of publication of application: **06.11.2024**
(21) Application number: 22916013.0
(22) Date of filing: 26.12.2022
(51) Int. Cl.: H01M 4/86, H01M 4/96, H01M 8/10

(54) **GAS DIFFUSION ELECTRODE BASE MATERIAL AND METHOD FOR PRODUCING SAME, AND FUEL CELL**

(30) Priority: 27.12.2021 JP 2021212045
(71) Applicant: Toray Industries, Inc., Tokyo 103-8666 (JP)
(72) Inventor: UTSUNOMIYA, Masamichi, Otsu-shi, Shiga 520-8558 (JP); WATANABE, Fumitaka, Otsu-shi, Shiga 520-8558 (JP)
(74) Representative: Mewburn Ellis LLP
(86) International application number: PCT/JP2022/047889
(87) International publication number: WO 2023/127790

(57) **Abstract**

A gas diffusion electrode medium for a fuel cell, which has high water repellent performance and excellent anti-flooding performance, can exhibit high power generation performance, and has high productivity is provided. A long gas diffusion electrode medium is composed of a conductive porous medium having a microporous layer containing a carbonaceous powder and a water repellent substance on one surface of the conductive porous medium, in which 65% or more of linear cracks observed in the microporous layer from the top surface are inclined at 45° to 90° from a width direction of the gas diffusion electrode medium.

## Description

### TECHNICAL FIELD

The present invention relates to a fuel cell, particularly a polymer electrolyte fuel cell, a gas diffusion electrode medium that is suitably used for the fuel cell, and a method for producing the same.

### BACKGROUND ART

Polymer electrolyte fuel cells are expected to be widely used for clean energy because they have high energy efficiency and discharge only water during operations.

A polymer electrolyte fuel cell includes, as a basic configuration, a polymer electrolyte membrane, a catalyst layer formed on both surfaces of the polymer electrolyte membrane, a gas diffusion electrode medium formed outside the catalyst layer, and two bipolar plates sandwiching the gas diffusion electrode medium.

A fuel cell is a system for electrically extracting energy generated when hydrogen and oxygen supplied from bipolar plates react with each other in the catalyst layers to produce water. Therefore, when an electrical load increases, that is, when the current taken out to the outside of the fuel cell is increased, a large amount of water (water vapor) and heat are generated. When the water vapor condenses into water droplets at a low temperature to block the pores of the gas diffusion electrode media, the amount of gas (oxygen or hydrogen) supplied to the catalyst layer decreases. Then, when all the pores are finally blocked by water, power generation is stopped (this phenomenon is referred to as flooding). Moreover, there is known a problem that when the fuel cell is operated at a relatively high temperature of 80°C or more, the electrolyte membrane dries, so that proton conductivity is lowered, and as a result, cell performance deteriorates (this phenomenon is referred to as dry-out). Many attempts have been made to solve these problems.

As the gas diffusion electrode medium, specifically, an electrically conductive porous medium such as carbon felt, carbon paper, or carbon cloth made of carbon fibers is used; however, condensation of water vapor generates large water droplets and tends to cause flooding since the fine pores are large. Thus, a micro-porous layer (also referred to as a microporous layer) containing conductive fine particles, such as a carbonaceous powder, is sometimes provided on the electrically conductive porous medium.

The microporous layer is generally formed by drying and sintering a microporous layer coating liquid in which a carbonaceous powder, fluorinated polymer particles functioning as a binder thereof, and a surfactant are dispersed in water. Here, there is a case where the carbonaceous powder is agglomerated during drying, and fissures called cracks are generated.

Since the electrolyte membrane swells and shrinks due to operating conditions, it can bend into cracks in the microporous layer and becomes damaged, which causes a decrease in durability.

Patent Document 1 discloses a technique capable of performing winding in a roll shape without causing a change in the structure of the coating layer before and after the winding by intentionally forming fine cracks in the microporous layer.

Patent Document 2 discloses a technique of reducing cracks by coating a surface of a gas diffusion electrode medium with a microporous layer coating liquid twice.

Patent Document 3 discloses a technique of reducing cracks by blending conductive carbon fibers into a microporous layer.

### PRIOR ART DOCUMENT

### PATENT DOCUMENTS

Patent Document 1: Japanese Patent No. 6750192
Patent Document 2: International Publication No. 2017/033536
Patent Document 3: Japanese Patent No. 5828623

### SUMMARY OF THE INVENTION

### PROBLEMS TO BE SOLVED BY THE INVENTION

In the technique described in Patent Document 1, a small amount of fine cracks can be intentionally provided by drying the liquid at a high temperature, but since the size and the number of cracks to be formed are small, the cracks do not function as a drainage path of water generated in the catalyst layer.

In the technique described in Patent Document 2, the number of cracks can be reduced by coating the microporous layer twice, but the number of cracks functioning as a drainage path of water generated in the catalyst layer is too small, and further improvement in power generation performance is required.

In the technique described in Patent Document 3, conductive carbon fibers are blended into the microporous layer, and the number of cracks can be reduced, but the number of cracks functioning as a drainage path of water generated in the catalyst layer is too small, and the drainage performance is insufficient.

### SOLUTIONS TO THE PROBLEMS

The inventors of the present application conducted intensive studies in various test examples, and have found that, by controlling directions of cracks, a drainage path can be efficiently formed, and the drainage performance can be improved. In other words, the present invention has the following configurations in order to solve the above-mentioned problems.
[1] A long gas diffusion electrode medium, including a conductive porous medium having a microporous layer containing a carbonaceous powder and a water repellent substance on one surface of the conductive porous medium, in which 65% or more of linear cracks observed in the microporous layer from the top surface are inclined at 45° to 90° from a width direction of the gas diffusion electrode medium.
[2] The gas diffusion electrode medium described in [1], in which 90% or more of cracks observed in the microporous layer from the top surface are linear cracks.
[3] The gas diffusion electrode medium described in [1] or[ 2], in which a number density of the linear cracks on the microporous layer is 0.20 to 50.00 cracks/cm².
[4] The gas diffusion electrode medium described in any of [1] to [3], in which an average length of the linear cracks is 100 to 500 um.
[5] The gas diffusion electrode medium described in any of [1] to [4], in which an average width of the linear cracks is 20 to 90 um.
[6] The gas diffusion electrode medium described in any of [1] to [5], in which an occupied area of the linear cracks on the microporous layer is 0.01 to 0.70%.
[7] A fuel cell including the gas diffusion electrode medium described in any of [1] to [6], a polymer electrolyte membrane, a catalyst layer, and a bipolar plate as constituent members, in which the bipolar plate functioning as a constituent member of the fuel cell has a groove channel, and 65% or more of linear cracks observed in the microporous layer from the top surface are inclined at 45° to 90° from a direction in which the groove channel extends.
[8] A method for producing a gas diffusion electrode medium having two steps of steps A and B to be described below:
   step A: a step of continuously coating one surface of a long conductive porous medium with a microporous layer coating liquid containing a carbonaceous powder and a water repellent substance, and then drying the long conductive porous medium at a temperature lower than 250°C while the long conductive porous medium is deflected by 1 to 7 cm on a cross section in a width direction; and
   step B: a step of sintering the conductive porous medium after step A at a temperature of 250°C or higher.
[9] The method for producing a gas diffusion electrode medium described in [8], including step C to be described below before or after step A:
   step C: a step of applying a water repellent substance to the long conductive porous medium and drying the long conductive porous medium at a temperature lower than 250°C.
[10] A transportation apparatus using the fuel cell described in [7] as a power supply source.

### EFFECTS OF THE INVENTION

By using the gas diffusion electrode medium, the method for producing the same, or the fuel cell according to the present invention, it is possible to efficiently form a crack functioning as a drainage path while suppressing peeling of the microporous layer, and to obtain a fuel cell having high productivity and excellent power generation performance.

### BRIEF DESCRIPTION OF THE DRAWINGS

Fig. 1 is a schematic view of a crack on a gas diffusion electrode medium and a microporous layer.

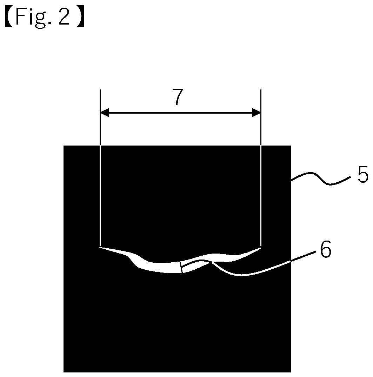

Fig. 2 is a schematic view of a crack observed in a microporous layer from the top surface.

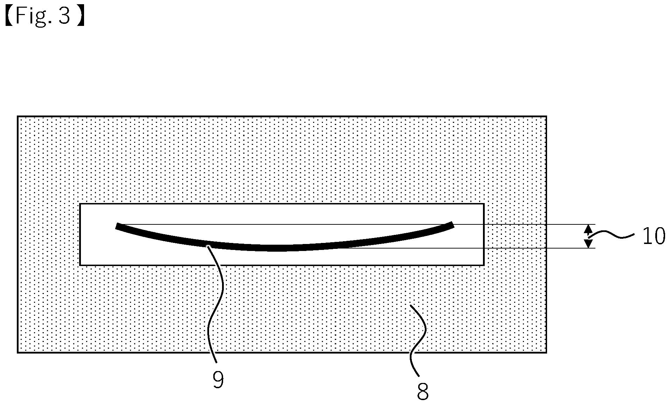

Fig. 3 is a schematic cross-sectional view illustrating deflection of the gas diffusion electrode medium at the inlet of a drying furnace in step A.

### EMBODIMENTS OF THE INVENTION

### <Microporous Layer>

In the present specification, the term "to" means a range including the boundary values at both ends thereof.

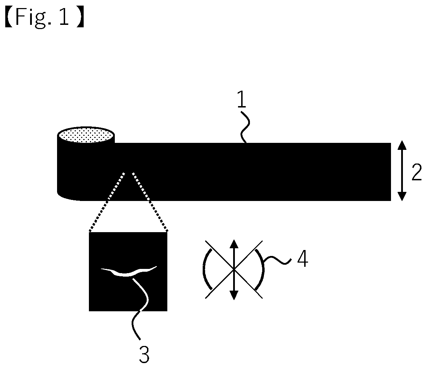

The gas diffusion electrode medium of the present invention has, on one surface thereof, a microporous layer containing a carbonaceous powder and a water repellent substance and having an average pore size of 0.6 um or less, and 65% or more of linear cracks observed in the microporous layer from the top surface are inclined at 45° to 90° from the width direction of the gas diffusion electrode medium. Fig. 1 is a schematic view of a crack on a gas diffusion electrode medium and a microporous layer. As illustrated in Fig. 1, a crack 3 on the microporous layer is observed through an optical microscope with a width direction 2 of a gas diffusion electrode medium 1 as a reference (0°), and the angle of the crack is determined by measuring by how many degrees it is inclined from the reference. The fact that the linear crack is inclined at 45° to 90° from the width direction of the gas diffusion electrode medium means that the crack is directed to the region indicated by reference numeral 4 in Fig. 1. As the optical microscope, for example, a digital microscope M205C (manufactured by Leica Microsystems) can be used. The same measurement is performed for 100 or more linear cracks, and among all linear cracks, the proportion of linear cracks inclined at 45° to 90° from the width direction of the gas diffusion electrode medium can be determined. When the proportion of the linear cracks inclined at 45° to 90° from the width direction of the gas diffusion electrode medium is 65% or more, the proportion of linear cracks in aligned directions is high, so it is difficult to form a branch-shaped crack formed by connecting cracks having two or more different directions. Since a junction of the cracks is often open to a large extent, the branch-shaped cracks cause peeling of the MPL, or cause the electrolyte membrane with a catalyst layer bending into the cracks, leading to deterioration in durability of the fuel cell. In addition, when a bipolar plate is incorporated into a fuel cell, the produced water generated in the catalyst layer on the rib of the bipolar plate can be quickly moved to the flow path by adjusting the direction of the crack so as to be orthogonal to the direction in which the groove channel of the bipolar plate extends (parallel to the width direction of the groove), so the water can be efficiently discharged, and the power generation performance is improved. The proportion of linear cracks inclined at 45° to 90° from the width direction of the gas diffusion electrode medium is preferably 70% or more, more preferably 75% or more. The proportion of linear cracks inclined at 45° to 90° from the width direction of the gas diffusion electrode medium can be controlled by using drying conditions of the microporous layer to be described below.

A linear crack of the present invention refers to a crack having an aspect ratio of 10 or more, the aspect ratio being obtained by dividing the length of the crack by the width of the crack, among cracks other than branch-shaped cracks and greatly bent cracks. The term "greatly bent" as used herein means having a length of a perpendicular line from a point on the crack farthest from a line segment connecting both ends of the crack to the line segment accounting for 30% or more of the length of the line segment. The length of a crack refers to the length of a line segment connecting both ends of the crack, and the width of a crack refers to the maximum width of the crack. In addition, the direction of a line segment connecting both ends of a linear crack is defined as the direction of the linear crack.

It is preferable that 90% or more of the cracks observed from the top surface in the microporous layer of the present invention be linear cracks. If a plurality of cracks are connected to form a large number of branch-shaped cracks, the strength of the microporous layer decreases, and a defect such as partial omission of the microporous layer from the surface of the gas diffusion electrode medium occurs. Since 90% or more of the cracks are linear cracks, it is possible to efficiently form a drainage path while preventing omission of the layer. The proportion of the linear cracks is more preferably 94% or higher, and even more preferably 97% or higher.

The number density of linear cracks observed in the microporous layer of the present invention from the top surface on the microporous layer is preferably 0.20 to 50.00 cracks/cm².

If the number density of the linear cracks is 50.00 cracks/cm² or less, when the process of coating the catalyst coating liquid on the microporous layer to form the catalyst layer is employed, the catalyst coating liquid hardly permeates the microporous layer and can be coated uniformly. In addition, it is possible to suppress drying of the catalyst layer and the electrolyte membrane due to an excessive number of drainage paths for discharging water generated in the catalyst layer during power generation of the fuel cell, and the power generation performance under a low humidification condition is improved. The number density of the linear cracks is more preferably 30.00 cracks/cm² or less, and even more preferably 10.00 cracks/cm² or less.

If the number density of the linear cracks is 0.20 cracks/cm² or more, they function as a drainage path for discharging water generated in the catalyst layer during power generation of the fuel cell, and the power generation performance under high humidification and high current density conditions is improved. The number density of the linear cracks is more preferably 2.00 cracks/cm² or more, and even more preferably 4.00 cracks/cm² or more.

The microporous layer having a number density of the linear cracks within a range of 0.20 to 50.00 cracks/cm² can be obtained by controlling the thickness and drying conditions of the microporous layer in the production method to be described below. Here, the number density is obtained by enlarging and observing a 0.5 mm to 1 cm square area on the surface of the microporous layer at 100 or more locations in a visual field using an optical microscope, measuring the number of linear cracks, and dividing the number by the measurement area. As the optical microscope, for example, a digital microscope M205C (manufactured by Leica Microsystems) can be used.

The average length of linear cracks observed in the microporous layer of the present invention from the top surface is preferably 100 to 500 um.

If the average length of the linear cracks is 500 µm or less, it is possible to make it difficult for two or more cracks to be connected to form a branch-shaped crack. If a plurality of cracks are connected to form a large number of branch-shaped cracks, the strength of the microporous layer decreases, and a defect such as partial omission of the microporous layer from the surface of the gas diffusion electrode medium may occur. The average length of the linear cracks is more preferably 450 um or less, and even more preferably 400 um or less.

If the average length of the linear cracks is 100 um or more, the linear crack portion functions as a drainage path, so water easily moves in the surface of the gas diffusion electrode medium, and the power generation performance under high humidification and high current density conditions is improved. The average length of the linear cracks is more preferably 150 um or more, and even more preferably 200 um or more.

The microporous layer having the average length of the linear cracks within the range of 100 to 500 um can be obtained by controlling the thickness and drying conditions of the microporous layer in the production method to be described below. Here, the length of each linear crack is determined by observing the linear crack portion on the surface of the microporous layer with an optical microscope and measuring the linear distance between both ends of the linear crack. As the optical microscope, for example, a digital microscope M205C (manufactured by Leica Microsystems) can be used. The same measurement is performed for 100 or more linear cracks, and the number average of the lengths of the linear cracks is set to the average length of the linear cracks.

The average width of the linear cracks observed in the microporous layer of the present invention from the top surface is preferably 20 to 90 um.

If the average width of the linear cracks is 90 pm or less, the durability of the fuel cell is less likely to decrease due to the electrolyte membrane with a catalyst layer bending into the linear cracks. In addition, when the process of coating a catalyst coating liquid on the microporous layer to form a catalyst layer is employed, the catalyst coating liquid can be uniformly coated with ease. The average width of the linear cracks is more preferably 70 um or less, and even more preferably 40 um or less.

If the average width of the linear cracks is 20 µm or more, the linear crack portion functions as a drainage path, so water easily moves in the in-plane direction of the gas diffusion electrode medium, and the power generation performance under high humidification and high current density conditions is improved. The average width of the linear cracks is more preferably 25 um or more, and even more preferably 30 um or more.

The microporous layer having the average width of the linear cracks within the range of 20 to 90 um can be obtained by controlling the thickness and drying conditions of the microporous layer in the production method to be described below. Here, the width of the linear crack refers to the maximum width of the linear cracks, and is determined by observing the linear crack portion on the surface of the microporous layer with an optical microscope and measuring the maximum value of the width of the linear crack. As the optical microscope, for example, a digital microscope M205C (manufactured by Leica Microsystems) can be used. The same measurement is performed on 100 or more linear cracks, and the number average of the widths of the linear cracks is taken as the average width of the linear cracks.

The occupied area of the linear cracks on the microporous layer according to the present invention is preferably 0.01 to 0.70%.

If the proportion of the occupied area of the linear cracks is 0.70% or less, when the process of coating the catalyst coating liquid on the microporous layer to form the catalyst layer is employed, the catalyst coating liquid hardly permeates the microporous layer and can be coated uniformly. In addition, it is possible to suppress drying of the catalyst layer and the electrolyte membrane due to an excessive number of drainage paths for quickly discharging water generated in the catalyst layer during power generation of the fuel cell, and the power generation performance under a low humidification condition is improved. The occupied area of the linear cracks is more preferably 0.60% or less, and even more preferably 0.30% or less.

If the proportion of the occupied area of the linear cracks is 0.01% or more, a drainage path for quickly discharging water generated in the catalyst layer during power generation of the fuel cell is formed, so power generation performance under a high humidification condition is improved. The proportion of the occupied area of the linear cracks is more preferably 0.05% or more.

The microporous layer having the occupied area of the linear cracks within the range of 0.01 to 0.70% or less can be obtained by controlling the thickness and drying conditions of the microporous layer in the production method to be described below. Here, the occupied area of the linear cracks is obtained by enlarging and observing a 0.5 mm to 1 cm square area on the surface of the microporous layer at any 100 or more locations in a visual field using an optical microscope, measuring the occupied area of the linear cracks, and dividing the area by the measurement area. As the optical microscope, for example, a digital microscope M205C (manufactured by Leica Microsystems) can be used.

The microporous layer of the present invention is a layer containing a carbonaceous powder and a water repellent substance, and examples of the carbonaceous powder include carbon blacks such as furnace black, acetylene black, lamp black, and thermal black; graphites such as scale-like graphite, vein graphite, earthy graphite, artificial graphite, expanded graphite, and flake graphite; and linear carbons such as vapor grown carbon fibers, single-wall carbon nanotubes, double-wall carbon nanotubes, multi-wall carbon nanotubes, carbon nanohorns, carbon nanocoils, cup stacked carbon nanotubes, bamboo-shaped carbon nanotubes, and graphite nanofibers. Among them, carbon black is preferably used from the viewpoint of cost and stability in product quality.

In addition, the water repellent substance contained in the microporous layer is preferably a fluorine-based polymer having high corrosion resistance. Examples of the fluorine-based polymers include polytetrafluoroethylene (PTFE), tetrafluoroethylene-hexafluoropropylene copolymers (FEP) and tetrafluoroethylene-perfluoroalkylvinyl ether copolymers (PFA).

The void content of the microporous layer is preferably in the range of 60 to 85%, more preferably in the range of 65 to 80%, further preferably in the range of 70 to 75%. When the porosity of the microporous layer is 60% or higher, the drainage performance is more improved and flooding can thus be more inhibited. When the porosity is 85% or less, the water vapor diffusivity is lower, and the dry out can be further reduced. Herein, the porosity of the microporous layer is measured using a sample for sectional observation obtained using an ion beam section processing apparatus by taking a photograph by magnifying the section 1000 to 10,000 times using a microscope such as a scanning electron microscope, measuring the area of the pores, and calculating the proportion of the pores area with respect to the observed area.

The areal weight of the microporous layer is preferably in the range of 10 to 35 g/m². If the areal weight of the microporous layer is 10 g/m² or more, the surface of the electrically conductive porous medium can be reliably covered, and the back diffusion of produced water is promoted. In addition, if the areal weight of the microporous layer is 35 g/m² or less, the distance from the catalyst layer to the groove channel of the bipolar plate is shortened, and the drainage performance is further improved. The areal weight of the microporous layer is more preferably 30 g/m² or less, and still more preferably 25 g/m² or less. Further, the areal weight of the microporous layer is more preferably 14 g/m² or more, and even more preferably 16 g/m² or more.

The thickness of the microporous layer is preferably in the range of 10 to 60 um. If the thickness of the microporous layer is 10 um or more, the surface of the electrically conductive porous medium can be reliably covered, and the back diffusion of produced water is promoted. In addition, if the thickness of the microporous layer is 60 um or less, the distance from the catalyst layer to the groove channel of the bipolar plate is shortened, and the drainage performance is further improved. The thickness of the microporous layer is more preferably 50 um or less, and even more preferably 40 um or less. Furthermore, the thickness is more preferably 20 um or more, and even more preferably 25 um or more.

The microporous layer of the present invention is a layer having an average pore size of 0.6 um or less, and preferably has an average pore size of 0.2 um or less. If the average pore size is small, flooding is unlikely to occur because a starting point for aggregation of water vapor hardly occurs. If the process of coating a catalyst coating liquid on the microporous layer to form a catalyst layer is employed, the catalyst coating liquid hardly permeates the microporous layer and can be coated uniformly. The average pore size of the microporous layer is preferably 0.03 um or more through which the reaction gas easily permeates. The average pore size can be controlled according to the size of the carbonaceous powder and a degree of dispersion.

In the present invention, the average pore size of the microporous layer refers to a pore size of the highest peak in a pore size distribution (a graph obtained by plotting the pore size on the horizontal axis and the Log differential pore volume on the vertical axis) that can be measured by a mercury intrusion method. In addition, the Log differential pore volume refers to a pore volume in which a value obtained by dividing a difference pore volume dV by a logarithmic differential value d (LogD) of a pore size is plotted with respect to an average pore size of each section. The average pore size of the microporous layer refers to a pore size at the peak of 0.6 um or less in a pore size distribution.

The average pore size of the microporous layer can be measured under the following conditions by cutting out three sample pieces each having a size of about 12 mm×20 mm square from the gas diffusion electrode medium, weighing the sample pieces, placing the sample pieces in a measurement cell so as not to overlap each other, and injecting mercury under reduced pressure. As a measuring apparatus, AutoPore 9520 manufactured by Shimadzu Corporation or a similar product can be used.

- Measurement pressure range: 6 kPa (400 um) to 414 MPa (30 nm)
- Measurement cell mode: in the course of increasing the pressure in the above pressure range
- Cell volume: 5 cm³
- Surface tension of mercury: 485 dyn/cm
- Contact angle of mercury: 130°.

### <Gas Diffusion Electrode Medium>

The gas diffusion electrode medium of the present invention has a microporous layer containing a carbonaceous powder and a water repellent substance on one surface of a conductive porous medium. By having the microporous layer between the catalyst layer and the conductive porous medium, water is hardly condensed at the interface between the catalyst layer and the conductive porous medium, flooding is suppressed, back diffusion of moisture into the electrolyte membrane is promoted, and thus dry-out can also be suppressed.

Here, preferable examples of the conductive porous medium include porous media containing carbon fibers such as a carbon fiber woven fabric, a carbon fiber paper sheet, a carbon fiber nonwoven fabric, carbon felt, carbon paper, and carbon cloth. In particular, a porous medium including a carbon fiber, such as a carbon felt, carbon paper or a carbon cloth, is preferably used because it is excellent in corrosion resistance, and further, a medium containing carbide obtained by binding a carbon fiber papermaking material with a carbide, i.e. carbon paper, is preferably used because it is excellent in the property of absorbing a change in dimension of an electrolyte membrane in a thickness direction, i.e. "spring property". The conductive porous medium is a layer having an average pore size of more than 0.6 um.

In the present invention, from the viewpoint of enhancing the gas diffusivity, it is preferable to reduce the thickness of the conductive porous medium such as carbon paper. In other words, although a thickness of the conductive porous medium such as carbon paper is preferably 220 um or less, more preferably 150 um or less, particularly preferably 120 um or less, if the thickness is too small, the mechanical strength becomes weak, which makes handling of the medium difficult in the production step. In order to facilitate handling, the thickness is usually preferably 70 um or more.

A preferable aspect of the density of the conductive porous medium varies depending on use (power generation) conditions. For example, a density of 0.35 g/cm³ or less is a preferable aspect under use (power generation) conditions in which gas diffusivity is regarded as important, and a density of 0.30 g/cm³ or less is more preferable. On the other hand, since an excellent conductivity can be obtained when the density is high, a density of 0.40 g/cm³ or more is a preferable aspect under use (power generation) conditions in which conductivity is regarded as important, and a density of 0.45 g/cm³ or more is more preferable. A density of the medium mentioned in the present invention is a value calculated from a mass measured in a square having 10 cm on each side and a thickness obtained by using a micrometer in a pressed state at a surface pressure of 0.15 MPa.

It is also a preferable aspect for the conductive porous medium in the present invention to be subjected to a water repellent processing for the purpose of improving the drainage performance. The water repellent substance used here may be the same as or different from that described above.

### <Fuel Cell>

The fuel cell of the present invention includes a polymer electrolyte membrane, catalyst layers formed on both surfaces of the polymer electrolyte membrane, a gas diffusion electrode medium formed outside the catalyst layers, and two bipolar plates sandwiching them. In the present invention, the gas diffusion electrode medium is disposed such that the surface having the microporous layer is in contact with the catalyst layers.

In the fuel cell of the present invention, the bipolar plates preferably have a groove channel, and 65% or more of linear cracks observed in the microporous layer from the top surface are preferably inclined at 45° to 90° from the direction in which the groove channel extends. In such a state, the proportion at which the length direction of the linear cracks is orthogonal to the extending direction of the groove channel is increased, and water is likely to move from directly above the rib of the bipolar plates which are most difficult to drain water to directly above the flow channel of the bipolar plates, so the power generation performance is improved.

### <Method for Producing Gas Diffusion Electrode Medium>

The method for producing a gas diffusion electrode medium according to the present invention includes two steps of steps A and B to be described below. In addition, it is preferable to have step C to be described below before or after step A. In addition, although a long conductive porous medium in steps A and C is not particularly limited as long as it has a certain length, it refers to, for example, a conductive porous medium having a length of 10 m or more.
Step A: A step of continuously coating one surface of a long conductive porous medium with a microporous layer coating liquid containing a carbonaceous powder and a water repellent substance, and then drying the long conductive porous medium at a temperature lower than 250°C while the long conductive porous medium is deflected by 1 to 7 cm on a cross section in a width direction
Step B: A step of sintering the conductive porous medium after step A at a temperature of 250°C or higher
Step C: A step of applying a water repellent substance to the long conductive porous medium and drying the medium at a temperature lower than 250°C.

### [Step A]

Step A is a step of continuously coating one surface of the conductive porous medium with a microporous layer coating liquid containing a carbonaceous powder and a water repellent substance, and then drying the conductive porous medium at lower than 250°C while the conductive porous medium is deflected by 1 to 7 cm on a cross section in the width direction.

As a preferable method of forming a microporous layer, there is a method of coating with a coating liquid for the microporous layer formation (hereinafter referred to as a microporous layer coating liquid) by using rotary screen printing, spraying, intaglio printing, gravure printing, die coater printing, bar coating, blade coating, knife coating, or the like.

The microporous layer coating liquid according to the present invention may contain a dispersion medium such as water or an organic solvent, or may contain a dispersion aid such as a surfactant. A concentration of the carbonaceous powder in the microporous layer coating liquid is preferably 5 mass% or more from the viewpoint of productivity. As the dispersion medium, water is preferred, and it is more preferred that a nonionic surfactant be used as the dispersant aid.

After the conductive porous medium is coated with the microporous layer coating liquid as described above, it is dried in a state in which the cross section in the width direction is bent so as to be curved downward, whereby linear cracks inclined at 45° to 90° from the width direction of the gas diffusion electrode medium can be formed when the gas diffusion electrode medium is wound up after drying. If the deflection amount during drying is 1 cm or more, the proportion of linear cracks inclined at 45° to 90° from the width direction of the gas diffusion electrode medium can be preferably increased. In addition, if the deflection amount during drying is 7 cm or less, a drying furnace having a small opening area of the inlet can be used, and energy loss during production can be preferably reduced. The deflection amount during drying mentioned here refers to a difference in height between both end portions of the conductive porous medium and the lowest position of the conductive porous medium when the conductive porous medium passes through a drying furnace. As a method of controlling the deflection amount during drying to 1 to 7 cm, a method of controlling the conveying tension of the conductive porous medium to an extremely low tension, or a method of applying a large amount of air from the top surface of the conductive porous medium in a drying furnace can be adopted.

If the time needed for drying in step A is too short, the number of cracks is too large due to rapid drying shrinkage. Therefore, the time needed for drying is preferably 2 minutes or longer, and more preferably 5 minutes or longer. The time is preferably 30 minutes or shorter, and more preferably 10 minutes or shorter from the viewpoint of productivity. If the temperature in step A is lower than 250°C, rapid crack formation can be suppressed, and the proportion of linear cracks inclined at 45° to 90° from the width direction of the gas diffusion electrode medium formed when the gas diffusion electrode medium is returned horizontally after drying and wound up can be preferably increased.

### [Step B]

Step B is a step of sintering the conductive porous medium after going through step A at a temperature of 250°C or higher. In order to decompose and remove a hydrophilic surfactant or the like at a temperature at which the water repellent substance is not decomposed, it is more preferable to heat the medium at 300 to 400°C in the air.

### [Step C]

Step C is a step of applying a water repellent substance to the long conductive porous medium and drying the medium at a temperature lower than 250°C.

As a method of imparting a water repellent substance to the conductive porous medium, a coating technique of coating the conductive porous medium with a water repellent substance by using die coating, spray coating, or the like, can also be applied, in addition to a treatment technique of immersing the conductive porous medium in a dispersion containing fluorinated polymers. By setting the temperature during drying in the step C to lower than 250°C, the cost of the drying step can be reduced. Thus, the temperature is preferably 200°C or lower, and even more preferably 150°C or lower. Although step C may be performed before step A or after step A, it is preferable to perform step C before the step A because the surfactant contained in the dispersion or the like containing the fluorinated polymers remains until step B, and the microporous layer coating liquid can be used in coating without being repelled.

### <Method for Producing Fuel Cell>

The gas diffusion electrode medium according to the present invention can be a gas diffusion electrode by forming a catalyst layer on a surface of the microporous layer. It is preferable that the catalyst layer contain, as a catalyst, carbon particles carrying a transition metal, particularly platinum or an alloy thereof on the surface thereof.

Moreover, a membrane electrode assembly can be obtained by (i) forming catalyst layers on both sides of a polymer electrolyte membrane, and further disposing and bonding the gas diffusion electrode medium of the present invention on the outer sides of the catalyst layers, or (ii) disposing and bonding a gas diffusion electrode, which is obtained by forming catalyst layers on the gas diffusion electrode medium of the present invention, on both sides of a polymer electrolyte membrane. Further, a polymer electrolyte fuel cell can be obtained by disposing bipolar plates on both sides of the membrane electrode assembly. The fuel cell of the present invention can be used as a power supply source for transportation apparatus such as automobiles, ships, and railways.

### EXAMPLES

Hereinafter, the present invention will be described in detail by way of examples.

### <Measurement of Areal Weight of Microporous Layer>

The areal weights of the gas diffusion electrode medium and the conductive porous medium were determined by dividing the mass of a sample cut into a 10 cm square by the area (0.01 m²) of the sample. The difference in areal weight between the conductive porous medium after step C and the gas diffusion electrode medium was defined as an areal weight of the microporous layer.

### <Measurement of Thickness of Microporous Layer>

The gas diffusion electrode medium or the conductive porous medium was placed on a smooth surface plate, and the difference in height between the case in which there was a measurement object and the case in which there was no measurement object under application of a pressure of 0.15 MPa was measured. Samples were taken at 10 different parts, and the average of the measured values of the difference in height was defined as a thickness. The difference in thickness between the gas diffusion electrode medium and the conductive porous medium was defined as the thickness of the microporous layer.

### <Evaluation of Linear Cracks>

Using a digital microscope M205C (manufactured by Leica Microsystems) as an optical microscope, the surface of the microporous layer was observed at a magnification at which a region of 1 mm square was displayed at 10 cm square on the monitor while being illuminated with a ring-shaped light, and the observation field was increased until 100 linear cracks were observed. The angle of the 100 linear cracks with respect to the width direction of the gas diffusion electrode medium, and the width and length of the linear cracks were obtained respectively, and the proportion of the linear cracks inclined at 45° to 90° from the width direction of the gas diffusion electrode medium, the average length of the linear cracks, and the average width of the linear cracks were obtained. In addition, the number density (cracks/cm²) of the linear cracks was obtained from the measurement area (cm²) in which up to 100 linear cracks were observed. The occupied area of the linear cracks was obtained from the following formula.Occupied area (%) of linear cracks = the average lenght (µm) of the linear cracks × the average width (µm) of the linear cracks × the number density (pieces/cm2) of the linear cracks/1,000,000.

### <Evaluation of Power Generation Performance of Polymer Electrolyte Fuel Cell>

To both surfaces of a fluorinated electrolyte membrane Nafion XL (manufactured by DuPont), catalyst layers each formed of platinum-supported carbon and Nafion (the amount of platinum in the layer was 0.4 mg/cm²) were bonded by hot pressing to produce a catalyst layer-coated electrolyte membrane (catalyst coated membrane or CCM). The gas diffusion electrode medium produced in each of Examples and Comparative Examples was disposed in a direction in which the microporous layer was in contact with both surfaces of the CCM, and hot pressing was performed again to form a membrane electrode assembly (MEA). The MEA in which a gasket having a thickness 80% of the thickness of the gas diffusion electrode medium was disposed around the gas diffusion electrode medium was set in a fuel cell (25 cm², serpentine flow channel). At this time, the bipolar plates were set so that the direction in which the groove channel of the bipolar plates extended matched the width direction of the gas diffusion electrode medium.

The cell temperature was set to 80°C, the dew points of hydrogen and air were set to 80°C, both hydrogen on the anode side and air on the cathode side were caused to flow in an absolute pressure of 150 kPa and a utilization efficiency of 65%, power was generated at a current density of 1.8 A/cm², and the voltage at that time was evaluated in 5 levels (A to E).

A: 0.55 V or higher
B: 0.50 V or higher and lower than 0.55 V
C: 0.45 V or higher and lower than 0.50 V
D: 0.40 V or higher and lower than 0.45 V
E: Lower than 0.40 V.

### (Example 1)

A carbon paper having a medium thickness of 150 um, a medium density of 0.30 g/cm³, a width of 50 cm, and a length of 100 m was impregnated with an aqueous dispersion liquid of PTFE, and then dried at 100°C to deposit 10 mass% of PTFE in 100 mass% of the carbon paper.

Acetylene black "Denka Black (registered trademark)" (manufactured by Denka Company Limited) as a carbonaceous powder, an aqueous dispersion liquid ("POLYFLON (registered trademark)" PTFE dispersion D-210C (manufactured by Daikin Industries, Ltd.)) of a PTFE resin as a water repellent substance, "TRITON (registered trademark)" X-100 (manufactured by NACALAI TESQUE, INC.) as a surfactant, and purified water as a dispersion medium were mixed to prepare a microporous layer coating liquid adjusted to have 7 parts by mass, 3 parts by mass, 14 parts by mass, and 76 parts by mass of carbon black, PTFE, surfactant, and purified water, respectively.

A water repellent-treated carbon paper was continuously coated with the microporous layer coating liquid by die coating, and dried at 150°C while being deflected by 2 cm in the cross section of the carbon paper in the width direction, and subsequently sintered at 380°C to obtain a gas diffusion electrode medium having a microporous layer areal weight of 30 g/m² and a microporous layer thickness of 48 um. Table 1 shows the evaluation results of the obtained gas diffusion electrode medium.

### (Example 2)

A gas diffusion electrode medium was obtained in the same manner as in Example 1 except that the deflection amount in step A was set to 3 cm. Table 1 shows the evaluation results of the obtained gas diffusion electrode medium.

### (Example 3)

A gas diffusion electrode medium was obtained in the same manner as in Example 1 except that the deflection amount in step A was set to 5 cm and the drying temperature in step A was set to 100°C. Table 1 shows the evaluation results of the obtained gas diffusion electrode medium.

### (Example 4)

A gas diffusion electrode medium was obtained in the same manner as in Example 3 except that the drying temperature in step A was set to 110°C. Table 1 shows the evaluation results of the obtained gas diffusion electrode medium.

### (Example 5)

A gas diffusion electrode medium was obtained in the same manner as in Example 3 except that the drying temperature in step A was set to 120°C. Table 1 shows the evaluation results of the obtained gas diffusion electrode medium.

### (Example 6)

A gas diffusion electrode medium was obtained in the same manner as in Example 3 except that the drying temperature in step A was set to 130°C. Table 1 shows the evaluation results of the obtained gas diffusion electrode medium.

### (Example 7)

A gas diffusion electrode medium was obtained in the same manner as in Example 3 except that the drying temperature in step A was set to 155°C. Table 1 shows the evaluation results of the obtained gas diffusion electrode medium.

### (Example 8)

A gas diffusion electrode medium was obtained in the same manner as in Example 3 except that the drying temperature in step A was set to 170°C. Table 1 shows the evaluation results of the obtained gas diffusion electrode medium.

### (Example 9)

A gas diffusion electrode medium was obtained in the same manner as in Example 3 except that the drying temperature in step A was set to 200°C. Table 1 shows the evaluation results of the obtained gas diffusion electrode medium.

### (Example 10)

A gas diffusion electrode medium was obtained in the same manner as in Example 6 except that the areal weight of the microporous layer was set to 15 g/m² and the thickness of the microporous layer was set to 23 um. Table 2 shows the evaluation results of the obtained gas diffusion electrode medium.

### (Example 11)

A gas diffusion electrode medium was obtained in the same manner as in Example 6 except that the areal weight of the microporous layer was set to 42 g/m² and the thickness of the microporous layer was set to 64 um. Table 2 shows the evaluation results of the obtained gas diffusion electrode medium.

### (Example 12)

A gas diffusion electrode medium was obtained in the same manner as in Example 6 except that the areal weight of the microporous layer was set to 49 g/m² and the thickness of the microporous layer was set to 74 um. Table 2 shows the evaluation results of the obtained gas diffusion electrode medium.

### (Example 13)

A gas diffusion electrode medium was obtained in the same manner as in Example 6 except that the thickness of the microporous layer was set to 44 um. Table 2 shows the evaluation results of the obtained gas diffusion electrode medium.

### (Example 14)

A gas diffusion electrode medium was obtained in the same manner as in Example 6 except that the thickness of the microporous layer was set to 60 um. Table 2 shows the evaluation results of the obtained gas diffusion electrode medium.

### (Comparative Example 1)

A gas diffusion electrode medium was obtained in the same manner as in Example 6 except that the deflection amount in step A was set to 0 cm. Table 2 shows the evaluation results of the obtained gas diffusion electrode medium. Flooding occurred, and the voltage reached 0 V at 1.8 A/cm², and no power was generated.

### (Comparative Example 2)

A gas diffusion electrode medium was obtained in the same manner as in Example 9 except that the deflection amount in step A was 0 cm, the areal weight of the microporous layer was set to 40 g/m², and the thickness of the microporous layer was set to 80 um. Table 2 shows the evaluation results of the obtained gas diffusion electrode medium. Flooding occurred, and the voltage reached 0 V at 1.8 A/cm², and no power was generated.

**[Table 1]**

| | Unit | Example 1 | Example 2 | Example 3 | Example 4 | Example 5 | Example 6 | Example 7 | Example Θ | Example 9 |
|---|---|---|---|---|---|---|---|---|---|---|
| Proportion of linear cracks inclined at 45° to 90° from the width direction of the gas diffusion electrode medium | % | 67 | 73 | 79 | 80 | 80 | 81 | 80 | 80 | 79 |
| Proportion of linear cracks to total cracks | % | >99 | >99 | >99 | >99 | >99 | >99 | >99 | >99 | >99 |
| Number density of linear cracks | cracks/cm² | 6.99 | 7.01 | 0.15 | 0.31 | 3.01 | 6.98 | 18.78 | 39.65 | 55.02 |
| Average length of linear cracks | µm | 299 | 298 | 301 | 302 | 299 | 301 | 300 | 299 | 298 |
| Average width of linear cracks | µm | 35 | 33 | 35 | 36 | 36 | 35 | 34 | 35 | 36 |
| Occupied area of linear cracks | % | 0.073 | 0.069 | 0.002 | 0.003 | 0.032 | 0.074 | 0.192 | 0.415 | 0.590 |
| Power generation performance | - | C | B | D | C | B | A | B | C | D |

**[Table 2]**

| | Unit | Example 10 | Example 11 | Example 12 | Example 13 | Example 14 | Comparative Example 1 | Comparative Example 2 |
|---|---|---|---|---|---|---|---|---|
| Proportion of linear cracks inclined at 45° to 90° from the width direction of the gas diffusion electrode medium | % | 79 | 80 | 79 | 79 | 79 | 49 | 49 |
| Proportion of linear cracks to total cracks | % | >99 | >99 | >99 | >99 | >99 | 93 | 33 |
| Number density of linear cracks | cracks/cm² | 7.01 | 7.21 | 6.97 | 6.57 | 7.00 | 7.10 | 102.21 |
| Average length of linear cracks | µm | 81 | 480 | 598 | 301 | 300 | 298 | 489 |
| Average width of linear cracks | µm | 33 | 35 | 34 | 16 | 100 | 35 | 89 |
| Occupied area of linear cracks | % | 0.019 | 0.121 | 0.142 | 0.032 | 0.210 | 0.074 | 4 .448 |
| Power generation performance | - | D | C | D | D | D | E | E |

### DESCRIPTION OF REFERENCE SIGNS

1: Gas diffusion electrode medium
2: Width direction of gas diffusion electrode medium
3: Crack on microporous layer
4: Area on gas diffusion electrode medium inclined at 45° to 90° from width direction
5: Microporous layer
6: Width of crack on microporous layer
7: Length of crack on microporous layer
8: Drying furnace
9: Conductive porous medium
10: Deflection amount of conductive porous medium

## Claims

1. A long gas diffusion electrode medium comprising
a conductive porous medium having a microporous layer containing a carbonaceous powder and a water repellent substance on one surface of the conductive porous medium,
wherein 65% or more of linear cracks observed in the microporous layer from the top surface are inclined at 45° to 90° from a width direction of the gas diffusion electrode medium.

2. The gas diffusion electrode medium according to claim 1, wherein 90% or more of cracks observed in the microporous layer from the top surface are linear cracks.

3. The gas diffusion electrode medium according to claim 1 or 2, wherein a number density of the linear cracks on the microporous layer is 0.20 to 50.00 cracks/cm².

4. The gas diffusion electrode medium according to claim 1 or 2, wherein an average length of the linear cracks is 100 to 500 um.

5. The gas diffusion electrode medium according to claim 1 or 2, wherein an average width of the linear cracks is 20 to 90 um.

6. The gas diffusion electrode medium according to claim 1 or 2, wherein an occupied area of the linear cracks on the microporous layer is 0.01 to 0.70%.

7. A fuel cell comprising:
the gas diffusion electrode medium according to claim 1 or 2;
a polymer electrolyte membrane;
a catalyst layer; and
a bipolar plate as constituent members,
wherein the bipolar plate functioning as a constituent member of the fuel cell has a groove channel, and
65% or more of linear cracks observed in the microporous layer from the top surface are inclined at 45° to 90° from a direction in which the groove channel extends.

8. The method for producing a gas diffusion electrode medium having two steps of steps A and B to be described below:
Step A: a step of continuously coating one surface of a long conductive porous medium with a microporous layer coating liquid containing a carbonaceous powder and a water repellent substance, and then drying the long conductive porous medium at a temperature lower than 250°C while the long conductive porous medium is deflected by 1 to 7 cm on a cross section in a width direction; and
Step B: a step of sintering the conductive porous medium after step A at a temperature of 250°C or higher.

9. The method for producing a gas diffusion electrode medium according to claim 8, the method having step C, which will be described below, before or after step A:
Step C: a step of applying a water repellent substance to the long conductive porous medium and drying the long conductive porous medium at a temperature lower than 250°C.

10. A transportation apparatus using the fuel cell according to claim 7 as a power supply source.
